# EUROPÄISCHE PATENTSCHRIFT

(11) **EP 3 328 514 B1**
(45) Veröffentlichungstag und Bekanntmachung des Hinweises auf die Patenterteilung: **30.10.2019**
(21) Anmeldenummer: 16715479.8
(22) Anmeldetag: 31.03.2016
(51) Int. Cl.: B01D 33/056, B01D 33/04

(54) **FILTERGURT UND VERFAHREN ZU DESSEN HERSTELLUNG**
FILTER BELT AND METHOD FOR PRODUCING SAME
BANDE FILTRANTE ET PROCÉDÉ DE FABRICATION DE LADITE BANDE

(30) Priorität: 28.07.2015 DE 102015214264
(43) Veröffentlichungstag der Anmeldung: 06.06.2018
(73) Patentinhaber: ContiTech Transportbandsysteme GmbH, 30165 Hannover (DE)
(72) Erfinder: BEHRENS, Carsten, 37434 Bilshausen (DE)
(74) Vertreter: Preusser, Andrea
(86) Internationale Anmeldenummer: PCT/EP2016/057016
(87) Internationale Veröffentlichungsnummer: WO 2017/016685

(56) Entgegenhaltungen:
- EP-A1- 0 601 627
- EP-A1- 2 030 920
- DE-A1- 2 308 947

## Beschreibung

Die Erfindung betrifft einen Filtergurt, welcher im Rahmen eines kontinuierlichen Filtrationsprozesses zur Trennung von Feststoffen und Flüssigkeiten eingesetzt wird. Filtergurte sind auf Vakuumfilteranlagen zur Aufbereitung von Mineralien, Erzen, Chemikalien, Farbstoffen, Nahrungsmitteln, Kohle und Papier, sowie in Rauchgasentschwefelungsanlagen und z.B. in der Düngemittelproduktion im Einsatz.

So genannte Vakuumfiltergurte zum Beispiel bilden für die Filtration einen kontinuierlich umlaufenden Trog zur Aufnahme eines Filtertuches und der darauf aufgegebenen Suspension. Es besteht zusätzlich die Möglichkeit einer Wasser-, Laugen- oder Säurewaschung. Im Verlauf der Filtrationsstrecke gelangt der Flüssiganteil der Suspension durch das Filtertuch in die Querrillen des Gurtes. Über einen in Längsrichtung angebrachten Vakuumbox und eine definierte Drainagelochung erfolgt die Ableitung des Filtrats. Der "entwässerte" und "getrocknete" Filterkuchen wird an der Umlenktrommel abgeworfen.

Dokument EP 2 030 920 A1 offenbart einen Fördergurt, wobei der Gurt auf seiner Laufseite, welche sich in direktem Kontakt zum Anlagentisch befindet und wobei sich der Kontakt vollflächig über die gesamte Gurtbreite erstreckt, gleitbegünstigend ausgebildet ist und mit einem Gleitgewebe ausgerüstet sein kann, da er auf dem Gleittisch gleitet.

Herkömmliche Filtergurte sind sowohl trag- als auch laufseitig mit einer Gummioberfläche ausgestattet und unterliegen je nach Unterstützungssystem einem gleitenden bzw. rollenden Lastabtrag. Im Falle eines gleitenden Lastabtrags wird die Gurtunterseite durch ein Stützmedium von der eigentlichen Trägeroberfläche getrennt über einen Anlagentisch geführt. Der klassische Fall ist hierbei die Wasserunterstützung. Bei dieser wird durch Wasserverteilrinnen in der Tischoberfläche ein dünner Wasserfilm zwischen Tisch und Gurtoberfläche eingespeist, auch findet das Prinzip des Luftkissens hier seine Anwendung, d.h. Druckluft- statt Wasserpolster zwischen den Oberflächen. Die Reibung zwischen dem Gummi und der Träger- (Gleit)oberfläche wird bei ausreichender Polsterdicke somit deutlich reduziert. Bei Schwankungen im Betriebsmitteldruck kann es zu einer unzureichenden Schmierung kommen und der Gurt setzt auf. Neben dem dann eintretenden erheblichen Reibverschleiß führt dies bei einem nur lokalen Kontakt auch zu einer erheblichen, unvorhergesehenen Steuerwinkung auf den Gradlauf des Gurtes an sich. Diese Störung ist zumeist die Hauptursache für einen zeitweilig deutlichen Leistungseinbruch der Filtrationsleistung als auch für den vorzeitigen Ausfall des Systems durch Gurtverschleiß.

Die Aufgabe der vorliegenden Erfindung liegt somit darin, einen Filtergurte bereitzustellen, der möglichst ohne eine Steuerwirkung, d.h. ohne Reibung, über den Anlagentisch geführt werden kann, so dass dabei nicht eine wie bei einem trockenen Betrieb sonst üblicherweise genutzte textile Gleitlage zum Einsatz kommen muss. Eine derartige textile Gleitlage ist aufgrund der auftretenden Wasserquellung nur für begrenzte Zeit nutzbar und / oder es kann zu einer flächigen Loslösung vom Trägergummi kommen und/oder einzelne Fäden bzw. Fasern fransen aus dem gewebten Verband aus und sammeln sich im Stützwassersystem und in der Anlage an.

Gelöst wird diese Aufgabe dadurch, dass die Seite des Filtergurtes, welche sich in direktem Kontakt zum Anlagentisch befindet und wobei sich der Kontakt vollflächig über die gesamte Gurtbreite oder auf die eigentliche Stütztischbreite ohne den Vakuumboxabschnitt erstreckt, mit Mikroglaskugeln versehen ist.
Diese Seite wird im Weiteren auch als laufseitige Oberfläche des Filtergurtes bezeichnet.

Überraschenderweise hat sich gezeigt, dass sich durch eine derartige Präparation der laufseitigen Oberfläche mit Mikroglaskugeln der Reibbeiwert optimieren lässt und somit die grundsätzlich vorhandene Steuerwirkung des Gurttisches bei einem ungewollten Kontakt von Gurt und Tisch auf ein Minimum reduzierbar ist. Zugleich wird eine Reibpaarung generiert, deren eigene Verschleißneigung möglichst / zusätzlich noch eine Notlaufeigenschaft gewährleistet ohne einen negativen Einfluss des Gleitmediums, wie bspw. Wasserquellung, auf die eingesetzte Oberflächenbeschichtung zu erhalten.

Der Aufbau des erfindungsgemäßen Filtergurtes ist grundsätzlich wie der eines klassischen Filtergurtes. Zusätzlich werden jedoch auf die laufseitige Oberfläche, d.h. in dem Kontaktbereich des Gurtes mit der Anlagenoberfläche, Mikroglaskugeln aufgebracht. Die verwendeten Mikroglaskugeln sorgen zum einen für eine deutliche Reduktion des Reibwertes der mit Glaskugeln beschichteten Gummioberfläche gegenüber dem Anlagentisch als auch für einen gegenüber dem Gummi des Gurtes auf einen Bruchteil reduzierten Abrieb. Als Mikroglaskugeln werden bevorzugt bereits expandierte Mikroglaskugeln, im Englischen auch als hollow glas microspheres bezeichnet, verwendet.

Die Mikroglaskugeln können hierbei auf verschiedene Art und Weise auf die laufseitige Oberfläche aufgebracht werden. Sie werden dabei in der Regel in eine bestehende Gummimatrix eingebettet.

In einer bevorzugten Variante werden die Mikroglaskugeln vor der Vulkanisation des Filtergurtes auf die laufseitige Oberfläche aufgestreut und / oder aufgesprüht und anschließend wird der Filtergurt vulkanisiert. Dieses Verfahren ist einfach in der industriellen Umsetzung und kostengünstig und erfordert keinen zusätzlichen Materialverbrauch.

In einer zweiten bevorzugten Variante wird ein gegenüber Wasserquellung unempfindliches Gewebe zunächst einseitig mit Gummi und Mikroglaskugeln beschichtet und vulkanisiert. Nach diesem ersten Verfahrensschritt erfolgt in einem nachgelagertem weiteren Verfahrensschritt bevorzugt mit Hilfe eines Kalanders eine erneute Gummierung des Gewebes auf der nicht mit Mikroglaskugeln beschichteten Seite. Diese erneute Gummierung dient dann als Haftschicht gegenüber dem zuvor konfektionierten Filtergurtrohling. Dieses derart gummierte Gewebe kann dann mit dem Filtergurt durch Vulkanisation oder durch Verklebung verbunden werden.

Die Erfindung wird nun anhand eines Ausführungsbeispiels unter Bezugnahme auf zwei schematische Zeichnungen erläutert.

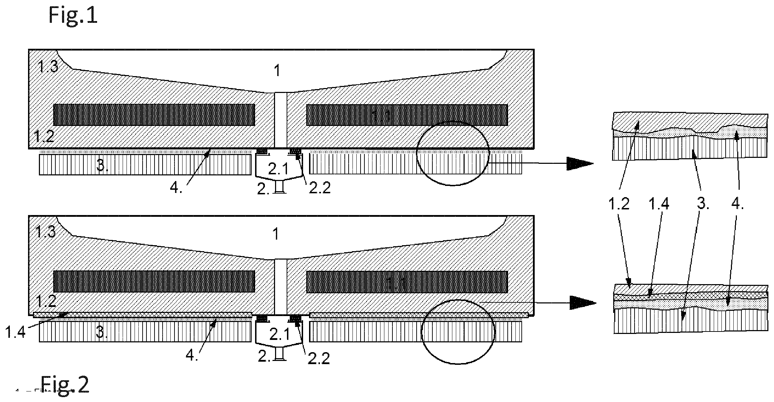

Figur 1 zeigt einen Filtergurt 1 incl. Anlagentisch nach dem derzeitigen Stand der Technik.

Es zeigt sich eine erhöhte Reibung an der Kontaktfläche zwischen dem Material, bevorzugt Gummi, der Laufseite 1.2. des Filtergurtes 1 und dem Gleittisch 3, der bevorzugt aus Kunststoff besteht. Der Reibungskoeffizient µ, auch als Reibungsbeiwert oder Reibbeiwert bezeichnet, beträgt hierbei etwa 0,55.

Figur 2 zeigt einen erfindungsgemäßen Filtergurt 1 incl. Anlagentisch.
Es zeigt sich eine deutlich geringere Reibung an der Kontaktfläche zwischen dem mit Mikroglaskugeln beschichteten Gewebe 1.4, welches sich auf der Laufseite 1.2. des Filtergurtes 1 befindet, und dem Gleittisch 3, der bevorzugt aus Kunststoff besteht. Der Reibungskoeffizient µ, auch als Reibungsbeiwert oder Reibbeiwert bezeichnet, ist hierbei deutlich kleiner als 0,55.

### Bezugszeichenliste

### (Teil der Beschreibung)

- 1: Filtergurt
1.1 Karkasse (Mehrlagen-Zugträgergewebe)
1.2 Laufseite LS (Gummi)
1.3 Tragseite TS (Gummi)
1.4 Oberflächenbeschichtung mit Mikroglaskugeln (Gummi-Gewebe)
- 2: Vakuumbox
2.1 Vakuumsammelbehälter
2.2 Schließ- und Dichtriemen
- 3: Gleittisch
- 4: Gleitwasserfilm

## Patentansprüche

1. Verfahren zur Herstellung eines Filtergurtes, dessen Seite, welche sich in direktem Kontakt zum Anlagentisch befindet und wobei sich der Kontakt vollflächig über die gesamte Gurtbreite oder auf die eigentliche Stütztischbreite ohne den Vakuumboxabschnitt des Anlagentisches erstreckt, mit Mikroglaskugeln versehen ist, **dadurch gekennzeichnet, dass** die Mikroglaskugeln vor der Vulkanisation auf diese Seite des Filtergurtes aufgestreut und / oder aufgesprüht werden und der Filtergurt anschließend vulkanisiert wird.

2. Verfahren zur Herstellung eines Filtergurtes dessen Seite, welche sich in direktem Kontakt zum Anlagentisch befindet und wobei sich der Kontakt vollflächig über die gesamte Gurtbreite oder auf die eigentliche Stütztischbreite ohne den Vakuumboxabschnitt des Anlagentisches erstreckt, mit Mikroglaskugeln versehen ist, **dadurch gekennzeichnet, dass** in einem ersten Verfahrensschritt ein gegenüber Wasserquellung unempfindliches Gewebe zunächst einseitig mit Gummi und Mikroglaskugeln beschichtet und vulkanisiert wird und anschließend in einem nachgelagertem weiteren Verfahrensschritt eine erneute Gummierung des Gewebes auf der nicht mit Mikroglaskugeln beschichteten Seite erfolgt, wobei das derart gummierte Gewebe dann anschließend mit dem Filtergurt durch Vulkanisation oder Verklebung verbunden wird.

3. Verfahren zur Herstellung eines Filtergurtes nach Anspruch 1 oder 2, **dadurch gekennzeichnet, dass** die Mikroglaskugeln bereits expandierte Mikroglaskugeln sind.

4. Filtergurt hergestellt durch ein Verfahren nach einem der Ansprüche 1 bis 3.

## Claims

1. Method for producing a filter belt, the side of which that is in direct contact with the support table, and with the contact extending fully over the entire belt width or onto the actual support table width without the vacuum box section of the support table, is provided with micro glass beads, **characterized in that** the micro glass beads are scattered and/or sprayed onto this side of the filter belt before the vulcanization and the filter belt is subsequently vulcanized.

2. Method for producing a filter belt, the side of which that is in direct contact with the support table, and with the contact extending fully over the entire belt width or onto the actual support table width without the vacuum box section of the support table, is provided with micro glass beads, **characterized in that**, in a first method step, a woven fabric that is insensitive to water swelling is first coated on one side with rubber and micro glass beads and vulcanized and subsequently, in a downstream further method step, a renewed rubberizing of the woven fabric is performed on the side that is not coated with micro glass beads, the woven fabric that is rubberized in such a way then subsequently being connected to the filter belt by vulcanization or adhesive bonding.

3. Method for producing a filter belt according to Claim 1 or 2, **characterized in that** the micro glass beads are already expanded micro glass beads.

4. Filter belt produced by a method according to one of Claims 1 to 3.

## Revendications

1. Procédé de fabrication d'une bande filtrante dont le côté, lequel est en contact direct avec la table de système et le contact s'étendant sur toute la surface sur toute la largeur de la bande ou sur la largeur réelle de table de support sans la partie de boîte à vide de la table de système, est muni de microbilles de verre, **caractérisé en ce que** les microbilles de verre sont saupoudrées et/ou pulvérisées sur ce côté de la bande filtrante avant la vulcanisation, puis la bande filtrante est vulcanisée.

2. Procédé de fabrication d'une bande filtrante dont le côté, lequel est en contact direct avec la table de système et le contact s'étendant sur toute la surface sur toute la largeur de la bande ou sur la largeur réelle de la table de système sans la partie de boîte à vide de la table de système, est muni de microbilles de verre, **caractérisé en ce que**, dans une première étape du procédé, un tissu insensible au gonflement par l'eau est d'abord enduit et vulcanisé sur un côté avec du caoutchouc et des microbilles de verre puis, dans une autre étape ultérieure du procédé, le tissu est à nouveau revêtu de caoutchouc sur le côté non revêtu de microbilles de verre, le tissu ainsi revêtu de caoutchouc étant ensuite lié à la bande filtrante par vulcanisation ou collage.

3. Procédé de fabrication d'une bande filtrante selon la revendication 1 ou 2, **caractérisé en ce que** les microbilles de verre sont des microbilles de verre déjà expansées.

4. Bande filtrante fabriquée par un procédé selon l'une des revendications 1 à 3.
